# EUROPEAN PATENT APPLICATION

(11) **EP 4 825 683 A1**
(43) Date of publication of application: **21.10.2026**
(21) Application number: 26171367.1
(22) Date of filing: 09.04.2026
(51) Int. Cl.: B60W 30/09, B60W 30/095, B60W 60/00

(54) **VEHICLE OBSTACLE AVOIDANCE AND BYPASS METHODS, RELATED DRIVING ASSISTANCE METHODS, AND ELECTRONIC DEVICES**

(30) Priority: 14.04.2025 CN 202510461464
(71) Applicant: Robert Bosch GmbH, 70442 Stuttgart (DE)
(72) Inventor: WANG, Huiwen, Jiangsu, 215021 (CN); SONG, Ji, Jiangsu, 215021 (CN)

(57) **Abstract**

Embodiments of the present invention provide a vehicle obstacle avoidance and bypass method and a related driving assistance method and electronic device. The vehicle obstacle avoidance and bypass method according to the embodiments of the present invention comprises: identifying the obstacle closest to the vehicle's current position among a plurality of obstacles of interest in front of the vehicle as a target obstacle; performing clustering on each of the target obstacle and one or more adjacent obstacles to determine whether to cluster the target obstacle and the adjacent obstacles into an obstacle group, thereby obtaining one or more obstacle groups; and for each obstacle group, determining the bypass direction of the vehicle based on the position and size of each obstacle in the obstacle group.

## Description

### Technical Field

The present invention relates generally to the technical field of vehicle driving assistance. In particular, the present invention relates to a vehicle obstacle avoidance and bypass method and a related driving assistance method and electronic device.

### Background Art

Obstacle avoidance and bypass capabilities in vehicles are among the core functions of driver assistance systems, and they typically employ an independent decision-making mechanism for individual obstacles. However, there are significant limitations to this discrete decision-making model. For example, during continuous obstacle avoidance, the system may frequently change the bypass direction, such as sometimes deciding to bypass from the left and sometimes deciding to bypass from the right. The instability of such decisions can affect the smoothness of the vehicle's driving, which not only leads to a decline in user experience but may also create safety risks.

Therefore, it is hoped that a technical solution can be proposed to solve the above problems in existing obstacle avoidance and bypass techniques.

### Summary of the Invention

In view of the above issues in the prior art, according to one aspect of the present invention, an obstacle avoidance and bypass method for a vehicle is provided, comprising: identifying the obstacle closest to the vehicle's current position among a plurality of obstacles of interest in front of the vehicle as a target obstacle; performing clustering on each of the target obstacle and one or more adjacent obstacles to determine whether to cluster the target obstacle and the adjacent obstacles into an obstacle group, thereby obtaining one or more obstacle groups; and for each obstacle group, determining the bypass direction of the vehicle based on the position and size of each obstacle in the obstacle group.

According to an embodiment of another aspect of the present invention, a driving assistance method for a vehicle is provided, comprising the obstacle avoidance and bypass method described above.

According to an embodiment of yet another aspect of the present invention, an electronic device is provided, comprising one or more processors configured to perform the obstacle avoidance and bypass method described above.

According to an embodiment of still another aspect of the present invention, a computer program product is provided, comprising instructions that, when executed by one or more processors, cause the one or more processors to perform the obstacle avoidance and bypass method described above.

An embodiment of another aspect of the present invention provides a machine-readable storage medium having executable instructions stored thereon that, when executed, cause one or a plurality of processors to perform the obstacle avoidance and bypass method described above.

In the vehicle obstacle avoidance and bypass solution according to the embodiments of the present invention, clustering is used to evaluate the vehicle's ability to pass through adjacent obstacles, and adjacent obstacles through which the vehicle cannot pass are clustered into a group to ensure the continuity and stability of the bypass process. The solution of the embodiments of the present invention is particularly applicable to scenarios involving construction areas or temporary road occupancy.

### Brief Description of the Drawings

FIG. 1 is a schematic block diagram of an obstacle avoidance and bypass system for a vehicle according to one embodiment of the present invention.
FIG. 2 is a flowchart of an obstacle avoidance and bypass method for a vehicle according to one embodiment of the present invention.
FIG. 3 schematically shows an example application scenario of a system and method according to embodiments of the present invention.

### Detailed Description of the Embodiments

The following describes specific embodiments of the present disclosure with reference to the accompanying drawings.

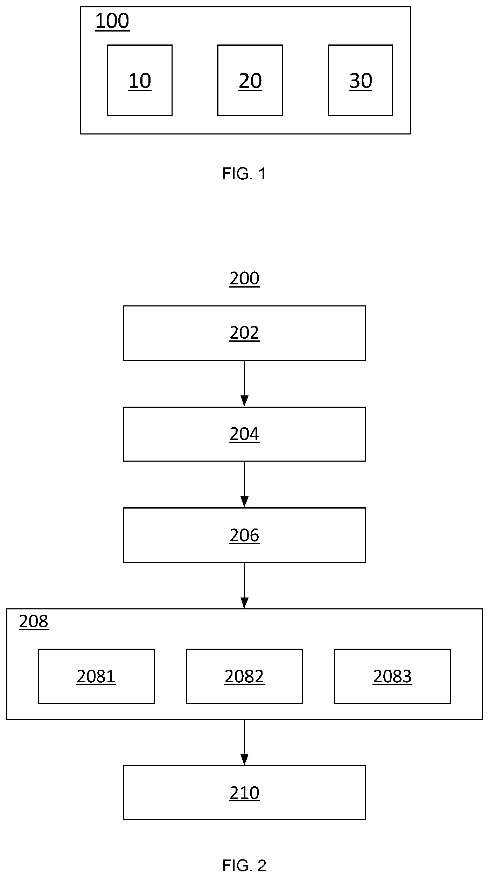

FIG. 1 shows a system 100 for vehicle obstacle avoidance and bypass according to one embodiment of the present invention. The system 100 is disposed on the vehicle and is therefore an onboard system. As shown in FIG. 1, the system 100 comprises a sensor unit 10, a control unit 20, and a communication unit 30.

The sensor unit 10 comprises a plurality of environmental perception devices (i.e., a plurality of onboard environmental sensors) deployed on the vehicle. For example, the sensor unit 10 comprises multimodal sensors such as radar sensors, cameras, and LiDAR, which can form complementary environmental perception capabilities. Of these, radar sensors can detect the distance and relative speed of obstacles through electromagnetic waves; cameras can capture high-resolution images of road scenes, providing rich semantic information; and LiDAR can generate accurate three-dimensional point cloud data through laser beam scanning.

The sensor unit 10 is used to collect lane information and obstacle information in the vehicle's driving environment. Lane information comprises relevant information about the lane in which the vehicle is currently traveling, such as the geometric features of the current lane, including, for example, the trajectory of the lane centerline, lane width, and road curvature. Obstacle information comprises a description of obstacles detected in the vehicle's driving environment, including, for example: the location (e.g., three-dimensional coordinates), dimensions (e.g., spatial occupancy in the three dimensions of length, width, and height), and category (e.g., vehicle, roadblock, etc.) of each obstacle.

According to the embodiments of the present invention, the focus is primarily on static obstacles. Static obstacles comprise immovable obstacles (such as curbs, guardrails, buildings, roadblocks, traffic cones, etc.) as well as movable obstacles that are temporarily stationary (such as parked vehicles). Thus, in the embodiments of the present invention, obstacles, detected obstacles, or obstacles of interest all refer to static obstacles.

The control unit 20 is used to implement the vehicle obstacle avoidance and bypass method according to the embodiments of the present invention (the specific implementation of the method will be described in detail in the method section below). In one embodiment, the control unit 20 may be implemented to comprise a memory and a processor, wherein the memory stores executable instructions that, when executed by the processor, implement the vehicle obstacle avoidance and bypass method according to the embodiments of the present invention.

The control unit 20 may be implemented in software, hardware (such as a custom integrated circuit), or a combination of software and hardware.

In one embodiment, the control unit 20 may be deployed in one of the following ways: 1) integrated into the vehicle's driver assistance system controller (ADAS ECU); 2) deployed in an onboard chip (such as an autonomous driving-specific SoC); 3) deployed in a vehicle controller (VCU); or 4) deployed in a domain controller (such as a chassis domain or autonomous driving domain controller).

In another embodiment, the control unit 20 may be divided into a plurality of functional modules based on function, and these functional modules may be deployed in a plurality of ECUs of the vehicle using a distributed architecture design. This distributed deployment approach can improve the scalability of functions and make full use of the vehicle's electronic and electrical architecture resources.

The communication unit 30 enables the ego vehicle to exchange data with other traffic participants in the traffic scenario via V2X (Vehicle-to-Everything) communication. For example, the communication unit 30 may exchange data with surrounding vehicles, roadside infrastructure, pedestrians, and cloud servers to form a vehicle-road cooperative communication ecosystem.

Through this highly reliable, low-latency V2X communication mechanism, when a plurality of vehicles in a traffic scenario are equipped with the obstacle avoidance and bypass system according to the embodiments of the present invention, collaborative decision-making between vehicles can be achieved. For example, a bypass priority may be assigned to each vehicle. This collaborative mechanism can not only effectively avoid obstacle avoidance path conflicts between vehicles, but also optimize overall traffic flow efficiency and improve the success rate of obstacle avoidance and road utilization in complex road conditions.

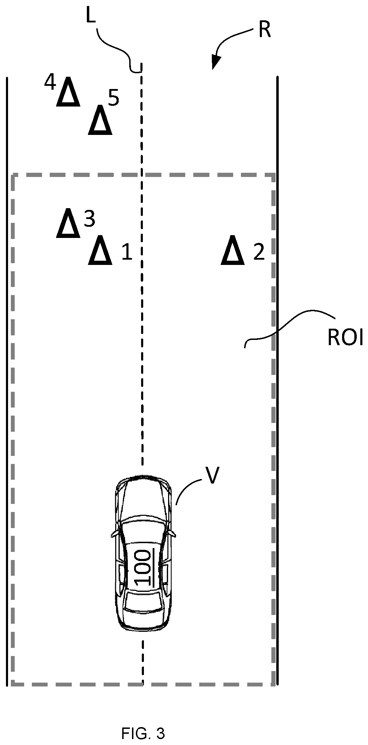

FIG. 2 shows a method 200 for vehicle obstacle avoidance and bypass according to one embodiment of the present invention. This method 200 may be executed by the control unit 20 described above. FIG. 3 shows an example driving environment for a vehicle V. The vehicle V is equipped with the system 100 as described above. The current driving lane of the vehicle V is represented by R, i.e., the current driving lane of the vehicle V is R. The specific implementation of the method 200 is described below with reference to FIGS. 2 and 3, using the control unit 20 performing the method 200 as an example.

In block 202, the control unit 20 acquires lane information and obstacle information in the driving environment of the vehicle V from the sensor unit 10. The lane information comprises lane information about the current driving lane of the vehicle V, such as the centerline and lane width of the current driving lane. The obstacle information comprises information about each of the plurality of detected obstacles within the sensing range of the sensor unit 10 (e.g., the aggregate sensing range of the plurality of sensors in the sensor unit 10), such as the location and size of each detected obstacle.

In block 204, the control unit 20 determines a plurality of obstacles of interest located within the region of interest from among the plurality of detected obstacles and determines the position and size of each obstacle of interest from the acquired obstacle information. The region of interest refers to the area covered by a first predetermined distance in front of the vehicle V and a second predetermined distance behind it in the current driving lane. Thus, the obstacles of interest comprises obstacles located in the current driving lane within a certain distance in front of and behind the vehicle V.

In one embodiment, the region of interest is defined by the following conditions: 1) a first predetermined distance in front of the vehicle V; 2) a second predetermined distance behind the vehicle V; and 3) the boundary lines of the current driving lane. The first predetermined distance in front of the vehicle is calculated by multiplying the current vehicle speed by a preset multiple of TTC (Time to Collision). The preset multiple is predetermined; for example, it is determined in advance through real vehicle testing and/or model calculations. The second predetermined distance behind the vehicle is a preset fixed value. Thus, the width of the region of interest is consistent with the width of the current lane, its forward extension distance is related to the current vehicle speed and TTC, and the rearward extension distance is a fixed value.

Here, the first predetermined distance refers to the distance extending longitudinally along the vehicle body from the front of the vehicle towards the direction of travel. The second predetermined distance refers to a distance extending longitudinally along the vehicle body from the rear of the vehicle in the opposite direction to the vehicle's direction of travel.

Referring to FIG. 3, the region of interest (ROI) is indicated by the dashed box. For example, according to the obstacle information received from the sensor unit 10, obstacles 1-5 are detected in the vehicle driving environment, wherein obstacles 1-3 fall into the region of interest; that is, obstacles 1-3 will be identified by the control unit 20 as obstacles of interest.

In block 206, the control unit 20 marks these obstacles based on the relative distance between the current position of the vehicle V (i.e., the current position of the ego vehicle) and each obstacle of interest to ensure that all obstacles of interest can be clustered without omission in order of distance in subsequent clustering. For example, the control unit 20 sorts the obstacles of interest in order of distance from the ego vehicle from nearest to farthest and assigns a label to each obstacle of interest corresponding to its ordered position.

In block 208, the control unit 20 performs clustering on each obstacle of interest in order from nearest to farthest according to the relative distance between each obstacle of interest and the vehicle V to determine whether the obstacle needs to be clustered with its adjacent obstacles into an obstacle group. In the embodiments of the present invention, an obstacle group refers to a set of a plurality of obstacles that will be treated as an integral whole when the ego vehicle (vehicle V) performs obstacle avoidance and bypass.

The control unit 20 first identifies the obstacle of interest nearest to the current position of the ego vehicle (vehicle V) as the target obstacle and clusters the target obstacle and one or more of its adjacent obstacles to obtain one or more obstacle groups. An embodiment of clustering is described in detail below.

In one embodiment, referring to block 2081, the control unit 20 determines whether to cluster the target obstacle and each of its one or more adjacent obstacles into an obstacle group based on the straight-line distance between them. In particular, for the target obstacle and each of its one or more adjacent obstacles, the control unit 20 determines whether the straight-line distance between the target obstacle and the adjacent obstacle is less than or equal to the straight-line distance threshold; if the determination result is affirmative, it determines to cluster the target obstacle and the adjacent obstacle into an obstacle group. Furthermore, when the straight-line distances between the target obstacle and the plurality of adjacent obstacles are all less than or equal to the straight-line distance threshold, these obstacles are clustered together into one obstacle group.

The straight-line distance threshold is pre-calibrated and stored in the control unit 20. For example, based on the vehicle type (such as truck, bus, private car, etc.) of the vehicle (i.e., the ego vehicle) equipped with the system 100, the straight-line distance threshold is pre-calibrated to the vehicle body width corresponding to that vehicle type.

In another embodiment, referring to block 2082, the control unit 20 determines whether to cluster the target obstacle and each of its one or more adjacent obstacles into an obstacle group based on the lateral distance difference and longitudinal distance difference between them. In particular, for the target obstacle and each of its one or more adjacent obstacles, the control unit 20 determines whether the lateral distance difference between the target obstacle and the adjacent obstacle is greater than a lateral distance difference threshold; and determines whether the longitudinal distance difference between the target obstacle and the adjacent obstacle is greater than a longitudinal distance difference threshold; when both determinations are affirmative, this indicates that there is sufficient space between the target obstacle and the adjacent obstacle for the vehicle V to pass. At this time, the control unit 20 determines not to cluster the target obstacle and the adjacent obstacle into one group.

Lateral distance difference refers to the distance difference between the target obstacle and an adjacent obstacle in a direction perpendicular to the lane centerline L, where the lane centerline L is the centerline of the vehicle's driving lane R. Longitudinal distance difference refers to the distance difference between the target obstacle and an adjacent obstacle in a direction parallel to the lane centerline L.

The lateral distance difference threshold and the longitudinal distance difference threshold are pre-calibrated and stored in the control unit 20. For example, the lateral distance difference threshold may be calibrated based on the vehicle body width. The longitudinal distance difference threshold may be calibrated based on the vehicle body length. In one embodiment, the control unit 20 may dynamically adjust the lateral distance difference threshold and the longitudinal distance difference threshold according to the current vehicle speed of the vehicle V to ensure the accuracy and safety of the clustering judgment criteria at different vehicle speeds. One specific embodiment of dynamically adjusting the lateral distance difference threshold and the longitudinal distance difference threshold is described below.

In one embodiment, the control unit 20 dynamically adjusts the lateral distance difference threshold according to the following equation (1): $Dlat _ th = klat \times Wvehicle \times \left(1+α\times v\right)$ (1) wherein:
*Dlat_th* is the lateral distance difference threshold;
*klat* is a first preset multiple representing a preset multiple of the vehicle body width; for example, the first preset multiple value is 1.2;
*Wvehicle* is the vehicle body width of the vehicle V;
*α* is a preset first vehicle speed adjustment coefficient (e.g., *α =* 0.01);
*v* is the current vehicle speed of the vehicle V.

For example, according to equation (1) above, the lateral distance difference threshold is 2.64 m when the vehicle body width of the vehicle V is 2 m and the current vehicle speed is 10 m/s (36 km/h).

The control unit 20 dynamically adjusts the longitudinal distance difference threshold according to the following equation (2): $Dlong _ th = klong \times Lvehicle \times \left(1+β\times v\right)$ (2) wherein:
*Dlong_th* is the longitudinal distance difference threshold;
*klong* is a second preset multiple representing a preset multiple of the vehicle body length; for example, the second preset multiple value is 1.5;
*Lvehicle* is the vehicle body length of the vehicle V;
*β* is a predetermined second vehicle speed adjustment coefficient (e.g., *β* = 0.015);
*v* is the current vehicle speed of the vehicle V.

For example, according to equation (2) above, the longitudinal distance difference threshold is 8.625 m when the vehicle body length of the vehicle V is 5 m and the current vehicle speed is 10 m/s (36 km/h).

The first and second preset multiples and the first and second vehicle speed adjustment coefficients are pre-calibrated based on real vehicle testing or model calculations.

Such dynamic adjustment can achieve the following: as vehicle speed increases, the lateral distance difference threshold and the longitudinal distance difference threshold increase accordingly to ensure that the vehicle has more safety space to avoid and bypass obstacles when traveling at high speeds; as vehicle speed decreases, the lateral distance difference threshold and the longitudinal distance difference threshold decrease accordingly to adapt to obstacle avoidance needs when traveling at low speeds. For example, in high-speed scenarios, when the vehicle V travels at 20 m/s (72 km/h), the lateral distance difference threshold and the longitudinal distance difference threshold will increase to ensure that the vehicle has enough space to safely bypass obstacles at high speeds. In low-speed scenarios, when vehicle V travels at 5 m/s (18 km/h), the lateral distance difference threshold and the longitudinal distance difference threshold will be appropriately reduced to adapt to obstacle avoidance needs at low speeds.

In yet another embodiment, referring to block 2083, when 1) the straight-line distance between the target obstacle and an adjacent obstacle is greater than the straight-line distance threshold and 2) the lateral distance difference is less than or equal to the lateral distance difference threshold or the longitudinal distance difference is less than or equal to the longitudinal distance difference threshold, the control unit 20 determines whether to cluster the target obstacle and the adjacent obstacle into an obstacle group based on the current vehicle body posture of the vehicle. This embodiment may be regarded as an intermediate scenario between blocks 2081 and 2082, i.e., clustering is further performed based on vehicle body posture when the vehicle is barely able to pass through the space between the target obstacle and the adjacent obstacle.

In one embodiment, the control unit 20 performs the following operations: based on the current vehicle body posture, it predicts whether the vehicle can pass through the gap between the target obstacle and the adjacent obstacle within its maximum steering range; if the prediction result is yes, the control unit 20 does not cluster the target obstacle and adjacent obstacles into a group; if the prediction result is no, the control unit 20 clusters the target obstacle and adjacent obstacles into a group. The maximum steering range comprises the range of turning radius and steering angle that the vehicle's steering system can achieve.

According to one embodiment of the present invention, the control unit 20 first identifies the obstacle closest to the ego vehicle as the target obstacle and performs the clustering of blocks 2081-2083. It is to be noted that the present invention does not define the order in which blocks 2081, 2082, and 2083 are executed. In particular, blocks 2081, 2082, and 2083 may operate independently, with no mutually binding relationship between them. For example, according to one embodiment of the present invention, there are cases where only one of blocks 2081-2083 is performed, cases where two of them are performed, and cases where all three are performed. Subsequently, the control unit 20 sequentially selects the next closest obstacle as the new target obstacle and, similarly, applies the clustering of blocks 2081-2083 to the new target obstacle until all obstacles of interest have completed clustering.

In block 210, the control unit 20 determines the bypass direction for each obstacle group. That is, it determines whether the vehicle should bypass the obstacle group from the left or right.

In one embodiment, the control unit 20 first determines the outer contour of each obstacle group, e.g., by calculating the minimum geometry of the obstacle group as its outer contour based on the position and size information of each obstacle in the group. The control unit 20 then calculates the boundary distances. For example, it calculates the horizontal distance between the leftmost point of the outer contour and the left boundary line of the current driving lane as the left clearance; and calculates the horizontal distance between the rightmost point of the outer contour and the right boundary line of the current driving lane as the right clearance. The control unit 20 then compares the left clearance and the right clearance; if the comparison result is that the left clearance is larger than the right clearance, it is determined to bypass the obstacle group from the left; if the comparison result is that the left clearance is smaller than the right clearance, it is determined to bypass the obstacle group from the right. The leftmost point of the outer contour is the leftmost point of the outer contour of the obstacle group in the direction perpendicular to the centerline of the lane; the rightmost point of the outer contour is the rightmost point of the outer contour of the obstacle group in the direction perpendicular to the centerline of the lane.

Here, the minimum bounding geometry of a plurality of obstacles refers to the minimum geometry that is capable of completely enclosing the plurality of obstacles, such as a minimum bounding rectangle, a minimum bounding circle, or a polygon.

In addition, if the comparison result is that the left clearance is exactly equal to the right clearance, the control unit 20 may use one of the following strategies to decide the bypass direction. 1) A default bypass direction is preset in the control unit 20. If the left clearance is exactly equal to the right clearance, the control unit 20 automatically selects the default bypass direction. The advantage of this strategy is that decision-making is fast. 2) The control unit 20 may determine the direction of bypass that is safer based on the driving environment information of the vehicle. For example, by comprehensively considering oncoming vehicles, pedestrians, traffic signs, etc. on the left and the right, the safer side is selected as the bypass direction. The advantage of this strategy is that it is intelligent and prioritizes safety. 3) Providing a message to the user of the vehicle (e.g., the driver of the vehicle) through a human-machine interface (HMI) in the vehicle indicating that the left clearance is exactly equal to the right clearance and prompting the user to select a bypass direction. The control unit 20 determines the direction selected by the user as the bypass direction. The advantage of this strategy is that it gives the vehicle user more control and improves the user experience.

According to one embodiment of the present invention, after deciding the bypass direction, the control unit 20 generates a bypass command comprising the bypass direction and sends the bypass command to the steering system of the vehicle so that the steering system performs the bypass maneuver in accordance with the bypass command. The control unit 20 may monitor the bypass status of the vehicle in real time during the course of the steering system executing the bypass command. Bypass status may comprise the following stages: 1) Start of bypass: The vehicle begins to change to the lane in the bypass direction; 2) During bypass: The vehicle travels on the bypass path to the left or right of the obstacle group; 3) End of bypass: The vehicle completes bypass and returns to near the centerline of the current driving lane.

According to one embodiment of the present invention, a strategy for coordinating the obstacle avoidance and bypass sequence of a plurality of vehicles in a traffic environment by means of vehicle-to-vehicle (V2V) communication is also provided. In a traffic environment, a plurality of vehicles are equipped with the obstacle avoidance and bypass system according to the embodiments of the present invention, and each of these vehicles decides its own bypass direction, which may result in lane-changing conflicts. For example, vehicle V may decide to bypass on the right, requiring it to use the adjacent lane to the right of its current driving lane; while vehicle V' (not shown) may decide to bypass on the left, requiring it to use the adjacent lane to the left of its current driving lane. If the two adjacent lanes are actually the same lane, a lane-changing conflict will occur. In this situation, the conflict can be resolved by determining the right-of-way priority of vehicles V and V', where the vehicle with the higher right-of-way priority will have the right to bypass first. V2V communication is performed through the communication units on each vehicle. The vehicle with the higher bypass priority passes first, followed by the vehicle with the lower right-of-way priority.

In one embodiment, the right-of-way priority is determined sequentially according to the following factors: (1) vehicle type; (2) type of current driving lane; and (3) timestamp. First, right-of-way priority is determined based on vehicle type. For example, ambulances or fire trucks, as emergency vehicles, have higher right-of-way priority than private vehicles. If two vehicles are of the same type, then the right-of-way priority is determined based on the type of current driving lane. For example, the right-of-way priority of a vehicle driving on a main road is higher than the right-of-way priority of a vehicle driving on a side road. If the vehicle type and the type of current driving lane are the same, then right-of-way priority is determined based on the timestamp of detecting the obstacle. For example, the vehicle that detects the obstacle first has a higher right-of-way priority.

According to one embodiment of the present invention, a driving assistance method for a vehicle is also provided, the method comprising the obstacle avoidance and bypass method described above. The driving assistance method may be applicable to the vehicle's adaptive cruise control (ACC) or traffic jam assist (TJA) functional modules/systems. For example, the functions implemented by the obstacle avoidance and bypass method may be used as a sub-functional module of the ACC (e.g., as an obstacle avoidance decision sub-module of the ACC system) or as a sub-functional module of the TJA (e.g., working in conjunction with the lateral control module of the TJA). For example, a software module based on the obstacle avoidance and bypass method may exchange data with ACC or TJA software modules (e.g., exchange data with the ACC or TJA system via predefined application programming interfaces) by way of program calls.

According to the embodiments of the present invention, an electronic device is further provided, comprising one or more processors for performing the method 200 as described above. The electronic device can be set up/deployed in vehicle components, such as the vehicle's domain controller, body controller, or forward-facing camera.

According to the embodiments of the present invention, a computer program product is provided, comprising instructions that, when executed by one or more processors, cause the one or more processors to perform the method 200 described above.

According to the embodiments of the present invention, a computer-readable storage medium is further provided. The computer-readable storage medium comprises instructions that, when executed, cause one or more processors to perform the method 200 as described above.

It should be understood that processors may be implemented using electronic hardware, computer software, or any combination thereof. Whether these processors are implemented as hardware or software will depend on the specific application and overall design constraints imposed on the system. As an example, the processors, any portions thereof, or any combinations of the processors provided herein can be implemented as microprocessors, microcontrollers, digital signal processors (DSPs), field-programmable gate arrays (FPGAs), programmable logic devices (PLDs), state machines, gate logic, discrete hardware circuits, and other suitable processing components configured to perform various functionalities described in the present invention. The functions of the processors, any portions thereof, or any combinations of the processors provided herein may be implemented as software executed on platforms such as microprocessors, microcontrollers, DSPs, or other suitable platforms.

Software may be broadly construed as representing instructions, instruction sets, code, code segments, program codes, programs, subprograms, software modules, applications, software applications, software packages, routines, subroutines, objects, execution threads, processes, functions, and the like. Software may reside on computer-readable media. Computer-readable media can include, for example, storage devices such as magnetic storage devices (e.g., hard drives, floppy disks, magnetic tapes), optical disks, smart cards, flash devices, random-access memory (RAM), read-only memory (ROM), programmable ROM (PROM), erasable PROM (EPROM), electrically erasable PROM (EEPROM), registers, or removable disks. Although memory is depicted as being separate from the processor in several aspects provided in the present invention, memory may also be located within the processor (e.g., cache or registers).

Although some embodiments are described above, these embodiments are provided by way of example only, and are not intended to limit the scope of the present disclosure. The appended claims and their equivalents are intended to cover all modifications, substitutions and changes made within the scope and subject matter of the present disclosure.

## Claims

1. An obstacle avoidance and bypass method for a vehicle, comprising:
identifying the obstacle closest to the vehicle's current position among a plurality of obstacles of interest in front of the vehicle as a target obstacle;
performing clustering on each of the target obstacle and one or more adjacent obstacles to determine whether to cluster the target obstacle and the adjacent obstacles into an obstacle group, thereby obtaining one or more obstacle groups; and
for each obstacle group, determining the bypass direction of the vehicle based on the position and size of each obstacle in the obstacle group.

2. The obstacle avoidance and bypass method according to claim 1, wherein the clustering comprises: for the target obstacle and each of its one or more adjacent obstacles,
determining whether the straight-line distance between the target obstacle and the adjacent obstacle is less than or equal to a straight-line distance threshold;
if the determination result is affirmative, determining to cluster the target obstacle and the adjacent obstacle into an obstacle group.

3. The obstacle avoidance and bypass method according to claim 1, wherein the clustering comprises: The clustering comprises: for the target obstacle and each of its one or more adjacent obstacles,
determining whether the lateral distance difference between the target obstacle and the adjacent obstacle is greater than a lateral distance difference threshold, wherein the lateral distance difference refers to the distance difference between the target obstacle and the adjacent obstacle in the direction perpendicular to the lane centerline of the vehicle's current driving lane;
determining whether the longitudinal distance difference between the target obstacle and the adjacent obstacle is greater than a longitudinal distance difference threshold, wherein the longitudinal distance difference refers to the distance difference between the target obstacle and the adjacent obstacle in the direction parallel to the lane centerline; and
when both determinations are affirmative, not clustering the target obstacle and the adjacent obstacle into one group.

4. The obstacle avoidance and bypass method according to claim 3, further comprising:
dynamically adjusting the lateral distance difference threshold and the longitudinal distance difference threshold according to the current vehicle speed, wherein both the lateral distance difference threshold and the longitudinal distance difference threshold increase as the current vehicle speed increases.

5. The obstacle avoidance and bypass method according to claim 1, wherein the clustering comprises: for the target obstacle and each of its one or more adjacent obstacles,
if the straight-line distance between the target obstacle and the adjacent obstacle is greater than a straight-line distance threshold and the lateral distance difference and longitudinal distance difference between the target obstacle and the adjacent obstacle are less than the lateral distance difference threshold and the longitudinal distance difference threshold, respectively, predicting whether the vehicle can pass between the target obstacle and the adjacent obstacle within its maximum steering range under the current vehicle body posture;
if the determination result is affirmative, determining to cluster the target obstacle and the adjacent obstacle into an obstacle group,
wherein the maximum steering range comprises the turning radius range and the steering angle range of the vehicle.

6. The obstacle avoidance and bypass method according to claim 1, further comprising:
acquiring lane information and obstacle information in the driving environment of the vehicle; wherein the lane information comprises the lane width and the lane centerline of the vehicle's current driving lane and the obstacle information comprises the position and size of each obstacle among the plurality of obstacles detected in the driving environment of the vehicle; and
a plurality of obstacles of interest located within the region of interest are selected from among the plurality of detected obstacles.

7. The obstacle avoidance and bypass method according to claim 6, wherein the region of interest refers to: the area covered by a first predetermined distance in front of the vehicle and a second predetermined distance behind it in the current driving lane,
wherein the first predetermined distance is associated with the current vehicle speed and time to collision (TTC) and the second predetermined distance is a preset fixed value.

8. The obstacle avoidance and bypass method according to claim 1, wherein determining the bypass direction comprises: for each obstacle group,
calculating the minimum bounding geometry of the obstacle group as its outer contour based on the position and size information of each obstacle in the group;
calculating the horizontal distance between the leftmost point of the outer contour and the left boundary line of the current driving lane as the left clearance, wherein the leftmost point of the outer contour is the leftmost point of the outer contour in the direction perpendicular to the centerline of the lane;
calculating the horizontal distance between the rightmost point of the outer contour and the right boundary line of the current driving lane as the right clearance, wherein the rightmost point of the outer contour is the rightmost point of the outer contour in the direction perpendicular to the centerline of the lane;
if the left clearance is larger than the right clearance, determining to bypass the obstacle group from the left; and
if the left clearance is smaller than the right clearance, determining to bypass the obstacle group from the right.

9. The obstacle avoidance and bypass method according to claim 1, further comprising:
when the bypass direction decided by the vehicle conflicts with the bypass direction decided by other vehicles in the driving environment in terms of lane, determining the bypass order of the vehicle and the other vehicles according to their right-of-way priority.

10. A driving assistance method for a vehicle, comprising the obstacle avoidance and bypass method according to any one of claims 1-9.

11. The driving assistance method according to claim 10, wherein the driving assistance method is applicable to the adaptive cruise control (ACC) or traffic jam assist (TJA) of a vehicle.

12. An electronic device, comprising one or more processors configured to perform the obstacle avoidance and bypass method according to any one of claims 1-9.

13. The electronic device according to claim 12, wherein the electronic device is disposed in a vehicle component; optionally, the vehicle component is a domain controller, body controller, or forward-facing camera.

14. A computer program product, comprising instructions that, when executed by one or more processors, cause the one or more processors to perform the obstacle avoidance and bypass method according to any one of claims 1-9.

15. A machine-readable storage medium storing executable instructions that, when executed, cause one or more processors to perform the obstacle avoidance and bypass method according to any one of claims 1-9.
